# EUROPEAN PATENT SPECIFICATION

(11) **EP 3 064 533 B1**
(45) Date of publication and mention of the grant of the patent: **25.07.2018**
(21) Application number: 14859038.3
(22) Date of filing: 30.10.2014
(51) Int. Cl.: C08J 3/02, B01D 33/04, B29B 13/06, B29B 15/02, C08J 3/22, B01D 33/64

(54) **PROCESS FOR PRODUCING WET MASTER BATCH, WET MASTER BATCH, RUBBER COMPOSITION, AND SOLID-LIQUID SEPARATION DEHYDRATION APPARATUS FOR PRODUCING WET MASTER BATCH**
VERFAHREN ZUR HERSTELLUNG EINES FEUCHTEN MASTERBATCHS, FEUCHTES MASTERBATCH, KAUTSCHUKZUSAMMENSETZUNG UND DEHYDRIERUNGSVORRICHTUNG ZUR FEST-FLÜSSIG-TRENNUNG ZWECKS HERSTELLUNG DES FEUCHTEN MASTERBATCHS
PROCÉDÉ DE PRODUCTION D'UN MÉLANGE MÈRE HUMIDE, MÉLANGE MÈRE HUMIDE, COMPOSITION DE CAOUTCHOUC, ET APPAREIL DE DÉSHYDRATATION PAR SÉPARATION SOLIDE-LIQUIDE POUR LA PRODUCTION DUDIT MÉLANGE MÈRE HUMIDE

(30) Priority: 31.10.2013 JP 2013227453; 21.05.2014 JP 2014105332
(43) Date of publication of application: 07.09.2016
(73) Proprietor: Bridgestone Corporation, Tokyo 104-8340 (JP)
(72) Inventor: YANAGISAWA, Yasuto, Kodaira-shi Tokyo 187-8531 (JP)
(74) Representative: Oxley, Robin John George
(86) International application number: PCT/JP2014/005512
(87) International publication number: WO 2015/064110

(56) References cited:
- WO-A1-2011/145586
- JP-A- H0 596 538
- JP-A- H0 975 638
- JP-A- H02 500 964
- JP-A- H07 178 303
- JP-A- S59 500 092
- JP-A- 2005 199 145
- JP-A- 2006 346 958
- JP-A- 2006 348 146
- JP-A- 2012 136 574
- JP-A- 2013 163 718
- JP-A- 2013 203 811
- JP-U- H07 509
- US-A1- 2002 026 004

## Description

### TECHNICAL FIELD

The present invention relates to a method for manufacturing a wet master batch. Also described are a wet master batch, a rubber composition, and a solid-liquid separation and dehydration device for manufacturing a wet master batch.

### BACKGROUND ART

A wet master batch is manufactured for the purpose of improving workability and filler-dispersibility of a rubber composition containing a filler such as carbon black. A wet master batch is generally manufactured by the steps including: preparing a latex of natural/synthetic rubber (a rubber latex solution may be optionally prepared by adding a surfactant, water, or the like to the rubber latex); preparing a filler slurry solution by dispersing a filler such as carbon black in a solvent such as water; mixing the rubber latex (solution) and the filler slurry solution thus prepared to cause a coagulation reaction to occur in a continuous manner, thereby obtaining a coagulation liquid containing a coagulated substance; separating only the coagulated substance from the coagulation liquid thus obtained; washing the coagulated substance thus separated, to remove impurities such as a coagulant attached to and/or contained in the coagulated substance; dehydrating the coagulated substance thus washed, to remove moisture remaining in the inner cavities thereof; drying the coagulated substance thus dehydrated; and optionally molding the coagulated substance thus dried into a desired shape such as a granular or sheet-like shape, thereby forming a wet master batch as a product.

### CITATION LIST

### Patent Literature

PTL 1: JP-B 4505038
PTL 2: US 2002/026004 A1
PTL 3: WO 2011/145586 A1
PTL 4: JP 2013 163718 A
PTL 5: JP 2012 136574 A

### SUMMARY

Making the particle size of the coagulated substance obtained by the mixing and coagulation process satisfactorily small and even can cause various advantageous effects, e.g. of remarkably decreasing an "out-of-standard" disposal rate to thus significantly increase a yield of the product in the solid-liquid separation process and the dehydration process, enhancing the dehydration rate, and the like. However, when the particle size of the coagulated substance is a few hundred µm or less, i.e. smaller than the conventional particle size (1 cm to several dozens of cm), a coagulation liquid containing the coagulated substance takes on a slurry-like state and this coagulation slurry cannot be either solid-liquid separated or dehydrated in a satisfactory manner by the conventional method for manufacturing a wet master batch using the conventional solid-liquid separator and dehydrator.

For example, in cases where the aforementioned coagulation slurry was subjected to solid-liquid separation and dehydration by i) centrifugation according to the conventional method for manufacturing a wet master batch or ii) heating and pressing by using a screw press device equipped with a heating screw shaft disclosed in PTL 1, the coagulation slurry was not dehydrated in a satisfactory manner in each case.

Further, in a case where the aforementioned coagulation slurry was subjected to a solid-liquid separation and dehydration process by natural filtration through a filtering cloth by gravity, moisture was somehow separated from the coagulation slurry but the quality (the moisture content in particular) of the solid substance obtained by the dehydration was unstable, whereby pieces of the solid substance had to be collected from the filtering cloth and pulverized prior to being fed to the drying process. Another problem of low production efficiency and high production cost also arose in this case.

In view of the problems described above, an object of the present disclosure is to provide a method for manufacturing a wet master batch and a solid-liquid separation and dehydration device for manufacturing a wet master batch, which allow a coagulation slurry containing a coagulated substance having relatively small particle size to be efficiently solid-liquid separated and dehydrated. A wet master batch and a rubber composition manufactured by the aforementioned method for efficiently manufacturing a wet master batch are also described.

Specifically, the present disclosure provides a method for manufacturing a wet master batch, including preparing a carbon black slurry by dispersing carbon black in water, mixing a rubber latex and the carbon black slurry to cause a coagulation reaction to occur therein, to obtain a coagulation slurry, and subjecting the coagulation slurry to solid-liquid separation and dehydration, wherein the solid-liquid separation and dehydration comprises:
filtering the coagulation slurry through a filter by gravity and depressurizing; and
pressing the coagulation slurry thus filtered against an outer peripheral surface of a drum by a pressing portion, thereby dehydrating the coagulation slurry by pressure exerted thereon,
wherein the carbon black has an acidic functional group on a surface thereof, and
the amount of an acidic functional group of the carbon black is in the range of 0.2 µeq/m² to 3.0 µeq/m².
It is possible to effectively solid-liquid separate and dehydrate a coagulation slurry containing a coagulated substance having relatively small particle size by subjecting the coagulation slurry to i) filtering through a filter by gravity and depressurizing and then ii) dehydration by exerting pressure thereon, as described above.

It is preferable in the method for manufacturing a wet master batch of the present disclosure that the solid-liquid separation and dehydration is carried out on the same filter and the filter is a belt-like filtering cloth adapted to run in a circulating manner. The solid-liquid separation process and the dehydration process, which had to be carried out at two different stages by using different devices in the prior art, can then be implemented as a series of continuous operations on a single filter by using a single device. Further, a device for solid-liquid separation and dehydration can be made compact because the filter is a belt-like filtering cloth running in a circulating manner.

It is preferable in the method for manufacturing a wet master batch of the present disclosure that a moisture content of a solid substance obtained by the solid-liquid separation and dehydration is in the range of 40 mass % to 65 mass %. Setting the moisture content of the solid substance to be within this range makes handling of the solid substance easy and curbs energy consumption in a drying process thereafter.

It is preferable in the method for manufacturing a wet master batch of the present disclosure that a solid substance obtained by the solid-liquid separation and dehydration is a sheet or a rectangular strip having thickness of 0.5 mm to 3.0 mm. The solid substance having such a configuration is easy to handle in the drying process thereafter.

It is preferable in the method for manufacturing a wet master batch of the present disclosure that the filter has air permeability in the range of 10 cm³/(cm²·sec) to 200 cm³/(cm²·sec). It is possible, by setting the air permeability of the filter to be within this range, to suppress an amount of the coagulated substance running off from the filter without decreasing an efficiency in filtration by depressurizing,.

It is preferable in the method for manufacturing a wet master batch of the present disclosure that a material of the filter is polypropylene or polyethylene terephthalate. The filter made of such a material as described is resistant to acid, thereby avoiding being deteriorated by acid contained in the coagulation slurry.

It is preferable in the method for manufacturing a wet master batch of the present disclosure that the filter is a twill-woven fabric or a satin-woven fabric. The filter made of such a fabric as described above is excellent in filtering capacity, cake-releasing property, clogging resistance, coagulation slurry-catching capacity, and the like.

It is preferable in the method for manufacturing a wet master batch of the present disclosure that threads of the filter have a monofilament configuration or a multifilament configuration. The filter having a monofilament configuration exhibits good filtering capacity, cake-releasing property, and clogging resistance. The filter having a multifilament configuration exhibits good coagulation slurry-catching capacity.

It is preferable in the method for manufacturing a wet master batch of the present disclosure that the filter has thickness in the range of 0.4 mm to 0.8 mm. The filter having thickness of this range exhibits a high filtering efficiency under decreased pressure, thereby effecting solid-liquid separation and dehydration in a satisfactory manner.

It is preferable in the method for manufacturing a wet master batch of the present disclosure that the running speed of the filter is 0.5 m/minute to 3.0 m/minute. It is possible to set a moisture content of the solid substance obtained by the solid-liquid separation and dehydration to be within a desired range by keeping the running speed of the filter in the aforementioned range.

A wet master batch is manufactured by the aforementioned method for manufacturing a wet master batch. This wet master batch, obtained by effective solid-liquid separation and dehydration of a coagulation slurry containing a coagulated substance having relatively small particle size, exhibits high resistance to wear and fatigue. A rubber composition includes the aforementioned wet master batch. This rubber composition also exhibits high resistance to wear and fatigue.

A solid-liquid separation and dehydration device for manufacturing a wet master batch has: a (filtration) filter; a filtration portion for filtrating, by gravity and depressurizing, a coagulation slurry obtained by mixing a rubber latex and a carbon black slurry to cause a coagulation reaction to occur therein; a drum; and a pressing portion for pressing the coagulation slurry thus filtrated, against an outer peripheral surface of the drum, thereby dehydrating the coagulation slurry by pressure exerted thereon. It is possible to efficiently carry out solid-liquid separation and dehydration of the coagulation slurry containing a coagulated substance having relatively small particle size by using this solid-liquid separation and dehydration device.

It is preferable that the solid-liquid separation and dehydration device for manufacturing a wet master batch has a washing device for washing the filter. This structure allows the filter to be used repeatedly for a long period.

It is preferable that the filter is a belt-like filtering cloth adapted to run through the filtration portion and the pressing portion in a circulating manner in the solid-liquid separation and dehydration device for manufacturing a wet master batch. The solid-liquid separation and dehydration device can be made compact by this structure.

According to the present disclosure, it is possible to provide a method for manufacturing a wet master batch and a solid-liquid separation and dehydration device for manufacturing a wet master batch, which enable a coagulation slurry containing a coagulated substance having relatively small particle size to be efficiently solid-liquid separated and dehydrated. Further, it is possible to provide a wet master batch and a rubber composition manufactured by the aforementioned method for efficiently manufacturing a wet master batch.

### BRIEF DESCRIPTION OF THE DRAWINGS

In the accompanying drawings, wherein:
FIG. 1 is a schematic view showing a solid-liquid separation and dehydration device applicable to a solid-liquid separation and dehydration process in a method for manufacturing a wet master batch according to one embodiment of the present disclosure;
FIG. 2 is a schematic view showing a solid-liquid separation and dehydration device applicable to a solid-liquid separation and dehydration process in a method for manufacturing a wet master batch according to another embodiment of the present disclosure.

### DETAILED DESCRIPTION

An embodiment of the present disclosure will be demonstratively described hereinafter.

### [Rubber latex]

Any of natural rubber latex, synthetic rubber latex, and a mixture thereof can be used as a rubber latex in the present disclosure. Type of the natural rubber latex is not particularly limited and natural rubber of any type may be appropriately selected in accordance with an application. Examples of the natural rubber include field latex, ammoniated latex, latex concentrate obtained by centrifugation, deproteinized latex treated by a surfactant/enzyme, a mixture thereof, and the like. Type of the synthetic rubber latex is not particularly limited and synthetic rubber of any type may be appropriately selected in accordance with an application. Examples of the synthetic rubber include SBR (styrene-butadiene rubber) latex, BR (butadiene rubber) latex, IR (polyisoprene rubber) latex, NBR (nitrile rubber) latex, CR (chloroprene rubber) latex, VP (vinylpyridine) latex, MBR (butadiene-methyl methacrylate rubber) latex, a mixture thereof, and the like. A rubber latex having a high solid content may be used after the solid content thereof has been adjusted to a desired value by using a dispersion medium such as water.

### [Carbon black slurry]

Type of the carbon black is not particularly limited and examples of the carbon black include those conventionally used in the rubber industry, such as SAF, ISAF, HAF, FF, FEF, GPF, SRF, a mixture thereof, and the like. The carbon black has a certain amount of an acidic functional group such as carboxyl group on a surface thereof, because then the acidic functional group is ionized and hydrated when the carbon black is dispersed in water under the presence of a base, so that the carbon black can be finely dispersed in a carbon black slurry in a stable manner. Carbon black having at a surface thereof an acidic functional group introduced by an oxidation treatment or the like can be used as the carbon black "having a certain amount of an acidic functional group". Type of a method for introducing an acidic functional group to the carbon black is not particularly restricted and examples thereof include liquid phase oxidation, vapor phase oxidation, and the like. Vapor phase ozone treatment is preferable because the vapor phase ozone treatment is less costly than liquid phase oxidation and enables efficient introduction of carboxyl group to carbon black. "Vapor phase ozone treatment" represents a treatment of bringing dry carbon black into contact with ozone gas for oxidation.

An amount of an acidic functional group of the carbon black thus treated by the aforementioned vapor phase ozone oxidation is in the range of 0.2 µeq/m² to 3.0 µeq/m². When the amount of an acidic functional group is too small, hydration at a surface of the carbon black may not occur in a satisfactory manner. When the amount of an acidic functional group is too large, vulcanization may be retarded in manufacturing a rubber product by using, as a material, a wet master batch thus produced. The amount of an acidic functional group of the carbon black thus treated by the vapor phase ozone oxidation can be determined by neutralization titration by a base. Specifically, the amount of an acidic functional group (µeq/m²) is determined by: adding 2 g to 5 g of the carbon black to 50 mL of 0.976 N sodium hydrogen carbonate and agitating the mixture for 6 hours; filtering the carbon black out from a resulting reaction solution; adding 0.05 N an aqueous solution of hydrochloric acid to the reaction solution and then carrying out neutralization titration of the reaction solution by 0.05 N an aqueous solution of sodium hydroxide until pH of the reaction solution reaches 7.0, to determine an amount of carboxyl group; dividing the amount of carboxyl group thus determined, by the nitrogen adsorption specific surface area (N₂SA; m²/g), to obtain an amount of carboxyl group (µeq/m²) formed per unit surface area of the carbon black; and regarding the amount of carboxyl group (µeq/m²) formed per unit surface area as the amount of an acidic functional group (µeq/m²).

A DBP (dibutyl phthalate) absorption value of the carbon black is not particularly restricted but preferably in the range of 50 mL/100 g to 100 mL/100 g. A DBP absorption value is an index representing a size of the carbon black structure. Carbon black having a DBP value ≥ 50 mL/100 g is less likely to re-coagulate after being dispersed. Carbon black having a DBP value ≤ 100 mL/100 g can cause a reinforcing effect in a satisfactory manner in a rubber composition. The CTAB adsorption specific surface area of the carbon black is not particularly restricted but preferably in the range of 100 m²/g to 150 m²/g. The CTAB adsorption specific surface area is an index representing a specific surface area which is to function as a contact interface with water. The CTAB adsorption specific surface area ≥ 100 m²/g ensures satisfactory hydration of the ionized acidic functional group at a surface of the carbon black treated by the vapor ozone oxidation. The CTAB adsorption specific surface area ≤ 150 m²/g ensures no deterioration of carbon black dispersibility to a rubber composition.

Concentration of the carbon black in a carbon black slurry is not particularly restricted but preferably in the range of 20 mass % or less. The carbon black concentration ≤ 20 mass % allows the carbon black to be finely dispersed in water in a stable manner.

A base is preferably added to the carbon black slurry, because then the acidic functional group at a surface of the carbon black is ionized and particles of the carbon black can be finely dispersed in water in a stable manner. Type of the base which can be used is not particularly restricted and examples of the base include sodium hydroxide, ammonium, a mixture thereof, and the like.

A carbon black slurry is prepared by mixing the carbon black with water and optionally a base and dispersing the carbon black in water. A dispersant may be added in order to disperse the carbon black in water in a stable manner. It is preferable, however, not to add a dispersant by, for example, instead using the carbon black treated by the vapor phase ozone oxidation described above. A "dispersant" represents a surfactant/resin added for the purpose of dispersing the carbon black in the carbon black slurry in a stable manner. Specific examples of the dispersant include: anionic polymer such as a polyacrylate, a salt of styrene-acrylic acid copolymer, a salt of vinylnaphthalene-acrylic acid copolymer, a salt of styrene-maleic acid copolymer, a salt of vinylnaphthalene-maleic acid copolymer, a sodium salt of β-naphthalenesulfonic acid-formaldehyde condensate, and a polyphosphate; non-ionic polymer such as polyvinyl alcohol, polyvinylpyrrolidone, and polyethylene glycol; protein such as gelatin, albumin, and casein; water-soluble natural rubbers such as gum arabic and tragacanth gum; glucosides such as saponin; a cellulose derivative such as methyl cellulose, carboxymethyl cellulose, and hydroxymethyl cellulose; and natural polymer such as a lignin sulfonate and shellac; and the like.

Type of a method for dispersing the carbon black is not particularly restricted and the carbon black may be dispersed in a carbon black slurry by using a known dispersing device such as a mixer, a homogenizer, a colloid mill, or the like. Preferable examples of the method for dispersing the carbon black in a carbon black slurry include: applying shearing stress to the carbon black slurry by using a medium; exerting shearing force to the carbon black slurry by rotation of a stirring blade; and injecting pressurized carbon black slurry from nozzles such that flows of the pressurized carbon black slurry thus injected collide with each other. The carbon black can be finely dispersed in an efficient manner by these preferable methods.

Dispersion of the carbon black by applying shearing stress to the carbon black slurry by using a medium can be carried out, for example, by wet pulverization of the carbon black in the carbon black slurry by using a bead mill. A commercially available bead mill may be used for this purpose. Conditions under which the bead mill is used may be set by a skilled person in an appropriate manner in accordance with the desired degree of dispersion of the carbon black, i.e. particle size distribution and volume-average particle diameter, as desired, of the carbon black in the carbon black slurry. The number of passes (the number of times by which the slurry is made to pass through the mill) may also be set in an appropriate manner in accordance with the desired degree of dispersion of the carbon black, with no particular restriction.

Dispersion of the carbon black by exerting shearing force to the carbon black slurry by rotation of a stirring blade can be carried out, for example, by mixing the carbon black slurry by an in-line mixer. A commercially available in-line mixer may be used for this purpose. A magnitude of shearing force exerted by rotation of the stirring blade may be set by a skilled person in an appropriate manner in accordance with the desired degree of dispersion of the carbon black, with no particular restriction.

Dispersion of the carbon black by injecting pressurized carbon black slurry from nozzles such that flows of the pressurized carbon black slurry thus injected collide with each other can be carried out, for example, by injecting pressurized carbon black slurry from nozzles in a plurality of directions by using "Star Burst" manufactured by Sugino Machine Limited, or the like, having a diagonal collision chamber such that flows of the pressurized carbon black slurry thus injected collide with each other. Pressure conditions under which "Star Burst" is used may be set by a skilled person in an appropriate manner in accordance with the desired degree of dispersion of the carbon black, with no particular restriction, and is preferably in the range of 50 MPa to 250 MPa. The number of passes (the number of times by which flows of the slurry are made to collide with each other) may also be set in an appropriate manner in accordance with the desired degree of dispersion of the carbon black, with no particular restriction.

The particle size distribution of the carbon black in the carbon black slurry is not particularly restricted but the ratio of particles having particle size ≤ 1 µm therein is preferably 15% or more in volume base because then a particle size of the coagulated substance in the coagulation slurry obtained by mixing the carbon black slurry with a rubber latex to cause a coagulation reaction can be made small and even. The particle size distribution, to be measured by the laser diffraction-light scattering method, can be measured by, e.g. a particle size analyzer "Microtrac MT 3000" manufactured by Nikkiso Co., Ltd., or the like.

### [Mixing and coagulation process]

A coagulation slurry, to be subjected to the solid-liquid separation and dehydration process of the present disclosure, can be obtained by mixing a rubber latex and a carbon black slurry in which the carbon black has been dispersed in water and causing a coagulation reaction therebetween. A blending ratio of the rubber latex and the carbon black slurry is not particularly restricted and may vary depending on an application or a purpose of a wet master batch to be manufactured.

Specifically, the coagulation slurry is obtained by charging the rubber latex and the carbon black slurry in a coagulation tank and exerting shearing force to the mixture liquid by a known stirring device such as a stirring blade provided in the coagulation tank, to effect mixing and cause a coagulation reaction to occur in the mixture liquid. In a case where a stirring blade is used as the stirring device, configuration, area, and rotation speed of the stirring blade are not particularly restricted and a stirring blade conventionally used in a mixing and coagulation process can be employed. Operation time in the conventional mixing and coagulation process is also applicable to the mixing and coagulation process of our method.

A coagulant is generally added, to complete coagulation, when a coagulation slurry is obtained by mixing a rubber latex and a carbon black slurry to cause a coagulation reaction to occur according to the conventional method. However, in a case where coagulation can be completed by only stirring, i.e. in a case where the particle size distribution of the carbon black in the carbon black slurry is set such that the ratio of particles having particle size ≤ 1 µm therein is 15% or more in volume base, for example, it is preferable that a coagulant is not used in the mixing and coagulation process. A "coagulant" represents an additive to be added for completion of the coagulation reaction in the present disclosure. Examples of the coagulant include: an acid such as formic acid, acetic acid, sulfuric acid, hydrochloric acid, and the like; and a salt such as aluminum sulfate, sodium chloride, calcium chloride, and the like.

### [Coagulant slurry]

A coagulation slurry containing a coagulated substance derived from the carbon black particles and the latex particles is obtained by mixing the rubber latex and the aforementioned carbon black slurry to cause a coagulation reaction to occur therebetween. Particle size of a coagulated substance in the coagulation slurry, to be subjected to the solid-liquid separation and dehydration process of our disclosure, is preferably smaller than the particle size (> 1 mm) of a coagulated substance obtained by the conventional method. The 90% volume cumulative particle diameter (D90) is preferably in the range of 40 µm to 1000 µm. The 90% volume cumulative particle diameter (D90) represents a particle diameter at the 90% cumulative volume in a cumulative particle quantity curve in volume base, plotted based on a result of particle size distribution measurement implemented by the laser-diffraction-light scattering method. The 90% volume cumulative particle diameter (D90) can be measured by, for example, a particle size analyzer "Microtrac MT 3000" manufactured by Nikkiso Co., Ltd., or the like. Content of the coagulated substance in the coagulation slurry thus determined is not particularly limited but preferably in the range of 5 mass % to 20 mass %. The coagulated substance can be especially easily handled in a solid-liquid separation and dehydration device when the content of the coagulated substance in the coagulation slurry is in the range of 5 mass % to 20 mass % and the 90% volume cumulative particle diameter (D90) of the coagulated substance is in the range of 40 µm to 1000 µm. The content of the coagulated substance, when it is higher than the aforementioned preferable ranges, may be adjusted to the preferable ranges by adding water thereto.

### [Solid-liquid separation and dehydration process]

A solid-liquid separation and dehydration process of subjecting the coagulation slurry to solid-liquid separation and dehydration in the present disclosure includes subjecting the coagulation slurry to filtration by gravity and depressurizing through a filtration filter and then pressure dehydration by pressing the coagulation slurry on an outer peripheral surface of a drum by a pressing portion. It is possible to efficiently solid-liquid separate and dehydrate a coagulation slurry containing a coagulated substance having relatively small particle size by subjecting the coagulation slurry to filtration by gravity and depressurizing through a filtration filter and then pressure dehydration, as described above.

The solid-liquid separation and dehydration process described above can be carried out by using, for example, a solid-liquid separation and dehydration device for manufacturing a wet master batch, with no particular restriction thereto. The solid-liquid separation and dehydration device for manufacturing a wet master batch has: a (filtration) filter; a filtration portion for filtrating, by gravity and depressurizing, a coagulation slurry obtained by mixing a rubber latex and a carbon black slurry in which carbon black has been dispersed in water, to cause a coagulation reaction to occur therein; a drum; and a pressing portion for pressing the coagulation slurry thus filtrated, against an outer peripheral surface of the drum, thereby dehydrating the coagulation slurry by pressure exerted thereon. It is possible to efficiently carry out solid-liquid separation and dehydration of the coagulation slurry containing a coagulated substance having relatively small particle size by using this solid-liquid separation and dehydration device. It is preferable that the solid-liquid separation and dehydration device has a washing device for washing the filter. This structure allows the filter to be used repeatedly for a long period.

It is preferable that the filter is a belt-like filtering cloth adapted to run through the filtration portion and the pressing portion in a circulating manner in the solid-liquid separation and dehydration device for manufacturing a wet master batch. The solid-liquid separation and dehydration device can be made compact by this structure.

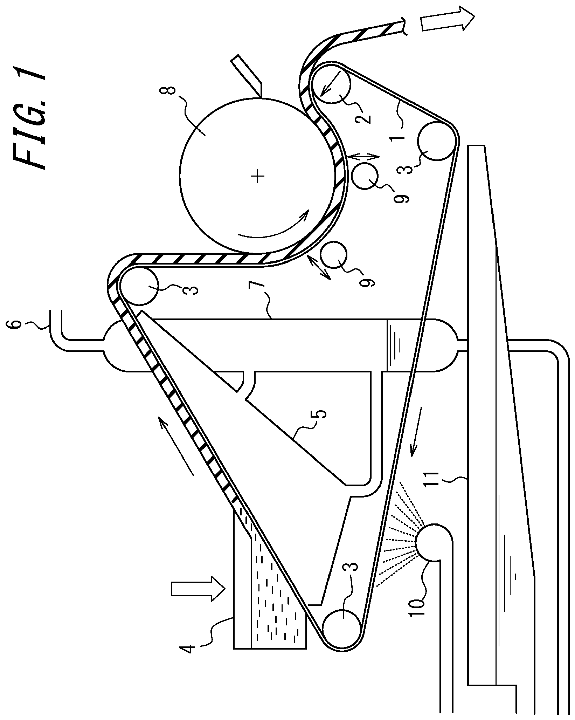

One example of the solid-liquid separation and dehydration device for manufacturing a wet master batch will be described by using FIG. 1. The solid-liquid separation and dehydration device shown in FIG. 1 is merely an example shown for the purpose of illustrating an embodiment, with no particular restriction thereto. The solid-liquid separation and dehydration device of FIG. 1 includes: a filtering cloth 1 as a filtration filter; a drive roller 2 and guide rollers 3 for causing the filtering cloth 1 to run clockwise in a circulating manner; a charge chute 4 for spraying a coagulation slurry onto the filtering cloth 1; a vacuum hopper 5 for effecting filtration of the coagulation slurry by gravity and depressurizing; a sucking blower for sucking air in the vacuum hopper 5 to depressurize it (not shown in FIG. 1 but connected to a gas-liquid separator 7 at a portion 6 thereof); a gas-liquid separator 7 for separating water obtained by filtration by gravity and depressurizing from air sucked by the sucking blower; a drum 8 having a large diameter and at least one pressure roll 9 each having a small diameter, for effecting pressure dehydration of the coagulation slurry thus filtrated by gravity and depressurizing; and a washing device 10 for washing the filtering cloth 1 after the pressure dehydration.

The vacuum hopper 5, the sucking blower (not shown) and the gas-liquid separator 7 constitute the filtration portion in the solid-liquid separation and dehydration device of FIG. 1, for example. The pressure rolls 9 constitute the pressing portion in the solid-liquid separation and dehydration device of FIG. 1, for example.

An example of the solid-liquid separation and dehydration process will be described by using FIG. 1. A coagulation slurry obtained by the mixing and coagulation process is supplied to the charge chute 4 from a coagulation tank now shown. The coagulation slurry is sprayed from the charge chute 4 onto the filtering cloth 1 such that the coagulation slurry accumulates thereon with a certain thickness. The coagulation slurry thus placed on the filtering cloth 1 is filtered not only by gravity and but also by depressurizing, i.e. sucking force generated in the vacuum hopper 5 connected to the sucking blower, when the coagulation slurry travels on the vacuum hopper 5. The coagulation slurry thus filtered by gravity and depressurizing is then subjected to pressure dehydration when it travels between the drum 8 and the pressure rolls 9. A solid substance having a desired moisture, thus obtained by pressure dehydration, is released and discharged from the filtering cloth 1. The filtering cloth 1 is washed by the washing device 10, while the filtering cloth 1 runs in a circulating manner back to the charge chute 4. When the filtering cloth 1 returns to the original position at the charge chute 4, a series of the operations described above are repeated. Water collected in the pressure dehydration and/or water used by washing the filtering cloth 1 may be retrieved by a water-retrieval hopper 11 or the like.

Type of the washing device 10 is not particularly restricted and examples thereof include a washing shower or the like for washing a filtration filter by spraying water for washing onto the filtration filter via a shower nozzle. Water for washing may be either disposed after a single use or retrieved by the gas-liquid separator 7, the water-retrieval hopper 11, and the like, to be purified by a circulation filtering apparatus or the like for reuse.

The filtration "by gravity" described above represents removing moisture from a coagulation slurry by gravity. The filtration "by depressurizing" can be carried out, for example, by providing a suction-type filter such as a vacuum hopper or the like under the filtration filter. Moisture can be efficiently removed from the coagulation slurry by simultaneously carrying out filtration by gravity and filtration by depressurizing in the filtering process.

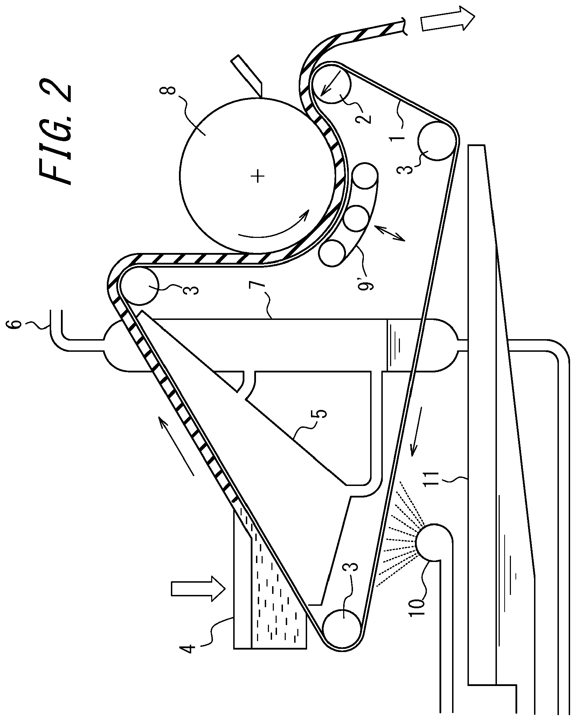

The pressure dehydration described above can be carried out by pressing a coagulation slurry on the filter against an outer peripheral surface of the drum having a large diameter, from the side of the filter, by the pressing portion. Type of the pressing portion is not particularly restricted and examples thereof include pressure rolls and a pressure belt. A pressure roll 9, a metal roll having outer peripheries coated with rubber or the like, is shown in FIG. 1. A pressure belt 9', constituted of a plurality of rolls and a belt made of rubber or the like suspended around the rolls with tension imparted therein such that the belt runs in a circulating manner by a motor or the like, is shown in FIG. 2. The pressure belt generally applies higher pressure than the pressure rolls because the former has a larger contact area with the filter than the latter. The pressing portion is provided so as to hold the filter between the drum and itself and be capable of moving toward/retreating from the drum. The pressing portion, when it moves toward the center axis of the drum, presses the coagulation slurry on the filter. More than one pressing portions may be provided according to necessity. The pressure rolls are preferable, in general, as the pressing portion because a pressure belt may need provision of a meandering prevention device for preventing the pressure belt from meandering, depending on an application, while the pressure rolls do not need provision of such an additional device.

The solid-liquid separation and dehydration process is preferably carried out on the same filter, although solid-liquid separation and dehydration could be done on separate filters, respectively. The solid-liquid separation process and the dehydration process, which were conventionally carried out at two different stages by using two different devices, respectively, can be completed at a single stage as a series of continuous processes using the same filter.

It is preferable that the filter is a belt-like filtering cloth adapted to run in a circulating manner. Specifically, the filtering cloth 1 is suspended around the drive roller 2 connected to a motor and a plurality of the guide rolls 3 for supporting the filtering cloth 1 at the outer peripheral surfaces of the rolls with tension imparted thereto such that the filtering cloth 1 runs in a circulating manner, driven by the drive roller 2, as shown in FIG. 1 and FIG. 2. The device for use in solid-liquid separation and dehydration can be made compact by a structure in which a belt-like filtering cloth as the filter runs in a circulating manner.

Type of the filter, whose characteristics change depending on various conditions such as air permeability, the material type and the like, can be appropriately selected with no particular restriction, based on a test conducted by a skilled person in consideration of the particle size of a coagulated substance in the coagulation slurry, the desired moisture of a solid substance obtained by the solid-liquid separation and dehydration process, and other relevant conditions. Preferable examples of the filter include a filter having air permeability in the range of 10 cm³/(cm²·second) to 200 cm³/(cm²·second). A filter having air permeability of ≥ 10 cm³/(cm²·second) avoids clogging and has a satisfactory high filtering efficiency. A filter having air permeability of ≤ 200 cm³/(cm²·second) can prevent a coagulated substance from running off therefrom and thus avoid a decrease in amount of a solid substance collected after the dehydration process. In a case where the filtration filter is a filtering cloth, air permeability of the filter is to be measured according to the testing method (8. 26) of air permeability prescribed in JIS L1096 (2010) "Method for testing woven cloth and knit cloth". Air permeability of the filtering cloth can be appropriately adjusted by changing conditions such as thread configuration, the weaving method of threads, and the like.

Examples of a material of the filter include polypropylene, polyester, nylon, and the like. Polypropylene or polyethylene terephthalate are preferable and polyethylene terephthalate is the most preferable among these examples. Polypropylene exhibits high resistance to acid and base and thus can prevent the filter from being deteriorated by acid contained in the coagulation slurry. Polyethylene terephthalate, in addition to exhibiting high resistance to acid and successfully preventing the filter from being deteriorated by acid contained in the coagulation slurry, has good cake-releasing property, as compared with polypropylene.

In a case where the filtration filter is a filtering cloth, characteristics of the filtering cloth change depending on various conditions such as thread configuration, the weaving method and the like, as well as air permeability and the material type, thereof. Examples of the thread configuration include a monofilament configuration, a multifilament configuration, staple, and the like. A monofilament configuration or a multifilament configuration is preferable and a multifilament configuration is the most preferable among these examples. A monofilament configuration is better than other configurations in terms of filtering capacity, cake-releasing property, clogging resistance, and the like. A multifilament configuration is slightly worse in terms of filtering capacity, cake-releasing property, clogging resistance but better in terms of coagulation slurry-catching capacity than a monofilament configuration. Examples of the method for weaving the filtering cloth include satin weave, twill weave, plain weave, and the like. Satin weave or twill weave is preferable and satin weave is the most preferable. Satin weave is better than other weaving methods in terms of filtering capacity, cake-releasing property, clogging resistance, and the like. Twill weave is slightly worse in terms of filtering capacity, cake-releasing property, clogging resistance but better in terms of coagulation slurry-catching capacity than satin weave.

Thickness of the filter is not particularly restricted but preferably in the range of 0.4 mm to 0.8 mm. The filter having thickness of ≥ 0.4 mm can complete the solid-liquid separation and dehydration process in a satisfactory manner and the filter having thickness of ≤ 0.8 mm can achieve a satisfactorily high efficiency in filtration by depressurizing.

The running speed of the filter is not particularly restricted but preferably in the range of 0.5 m/minute to 3.0 m/minute. Too high running speed of the filter results in insufficient solid-liquid separation and dehydration and thus too high moisture content of a solid substance obtained by the solid-liquid separation and dehydration process. Too low running speed of the filter results in excessive solid-liquid separation and dehydration and thus too low moisture content of a solid substance obtained by the solid-liquid separation and dehydration process, which deteriorates workability and handling properties of the solid substance in the subsequent operation.

Moisture content of a solid substance obtained by the solid-liquid separation and dehydration process is preferably in the range of 40 mass % to 65 mass %, although the moisture content is not particularly restricted and can be appropriately adjusted in accordance with an application. Setting the moisture content of the solid substance to be within the aforementioned range makes handling of the solid substance easy and also curbs energy consumption in the subsequent drying process.

The solid substance obtained by the solid-liquid separation and dehydration process is preferably a sheet or a rectangular strip having thickness of 0.5 mm to 3.0 mm, although the configuration of the solid substance is not particularly restricted. The solid substance having such a configuration is easy to handle in the drying process thereafter. Thickness of the solid content can be adjusted by changing i) amount and thickness of the coagulation slurry supplied to the filter, ii) a clearance between the filter and the pressing portion prior to the stage of supplying the coagulation slurry, and the like. The solid substance, having a moisture content in the range of 40 mass % to 65 mass %, takes on a sheet-like configuration.

### [Drying process and molding process]

A wet master batch can be produced by drying the solid substance obtained as described above by using a conventional dryer such as a vacuum dryer, an air dryer, a drum dryer, a hand dryer, a multi-screw kneading extruder, or the like. A process of molding the solid substance into a desired shape may optionally be carried out either prior to or after the drying process. An additive such as anti-oxidant may optionally be added at this stage. The wet master batch thus obtained can be used as a material of a rubber composition for manufacturing various types of rubber products.

### EXAMPLES

The present disclosure will be described further in detail by Examples and Comparative Examples hereinafter. These Examples and Comparative Examples do not restrict the scope of the present disclosure by any means.

### [Preparation of coagulation slurry for Examples]

A coagulation slurry was obtained by: preparing a natural rubber latex and a carbon black slurry containing carbon black having the 50% volume cumulative particle diameter (D50) of ≤ 1 µm; and mixing the natural rubber latex and the carbon black slurry, to cause a coagulation reaction to occur therein under the presence of formic acid as a coagulant. The 50% volume cumulative particle diameter (D50) of the carbon black in the carbon black slurry and the 90% volume cumulative particle diameter (D90) of a resulting coagulated substance in the coagulation slurry were measured, respectively, by "Microtrac MT 300" manufactured by Nikkiso Co., Ltd. Content of the coagulated substance in the coagulation slurry was determined by: solidifying the coagulation slurry by means of evaporation at 130 °C; measuring the mass of a resulting dry and solid substance as the mass of the coagulated substance; calculating a difference in mass between before and after the drying process, of the coagulation slurry, and regarding the difference as the moisture content of the coagulation slurry; and calculating a proportion of the coagulated substance content with respect to the moisture content.

### [Solid-liquid separation and dehydration in Examples]

The coagulation slurry was subjected to solid-liquid separation and dehydration under the conditions shown in Table 1 by using the solid-liquid separation and dehydration device provided with pressing rolls as a pressing portion and a filtering cloth, as shown in FIG. 1. "Width of supplied coagulation slurry" in the condition items in Table 1 represents a width in which the coagulation slurry was sprayed on the filtering cloth.

### [Evaluation of solid-liquid separation and dehydration]

A solid substance obtained by subjecting the coagulation slurry to the solid-liquid separation and dehydration process and the solid-liquid separation and dehydration process itself were evaluated, respectively, as described below.

### (1) Moisture content of solid substance

Moisture content of the solid substance obtained by the solid-liquid separation and dehydration process was measured by a heat drying type moisture analyzer "MX-50" manufactured by A & D Company, limited. The results are shown in Table 1 below.

### (2) Recovery rate of solid substance

The coagulation slurry was charged by a unit charging amount and subjected to solid-liquid separation and dehydration, whereby a solid substance was obtained. The total mass of the coagulated substance contained in the coagulation slurry charged by the unit charging amount was calculated, based on the unit charging amount of the coagulation slurry and the content of the coagulated substance in the coagulation slurry. A ratio of the mass of the solid substance eventually obtained, with respect to the total mass of the coagulated substance thus calculated, was determined. The results are shown in Table 1 below.

### (3) Amount of coagulated substance running off from filter

The coagulation slurry was charged by a unit charging amount and subjected to solid-liquid separation and dehydration. The coagulation slurry running off through the mesh of the filter was collected during the solid-liquid separation and dehydration process and the mass of the runoff coagulation slurry thus collected was measured. The total mass of the coagulated substance contained in the runoff coagulation slurry, i.e. the total mass of the runoff coagulated substance, was calculated, based on the amount of the runoff coagulation slurry and the content of the coagulated substance in the runoff coagulation slurry. Further, the total mass of the coagulated substance contained in the coagulation slurry charged by the unit charging amount was calculated. A ratio of the mass of the runoff coagulated substance with respect to the total mass of the coagulated substance thus calculated was determined. The results are shown in Table 1 below.

### (4) 90% volume cumulative particle diameter of runoff coagulated substance

The 90% volume cumulative particle diameter (D90) of the coagulated substance, which ran off through the mesh of the filter and was collected as described in (3) above, was measured by "Microtrac MT 300" manufactured by Nikkiso Co., Ltd. The results are shown in Table 1 below.

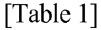

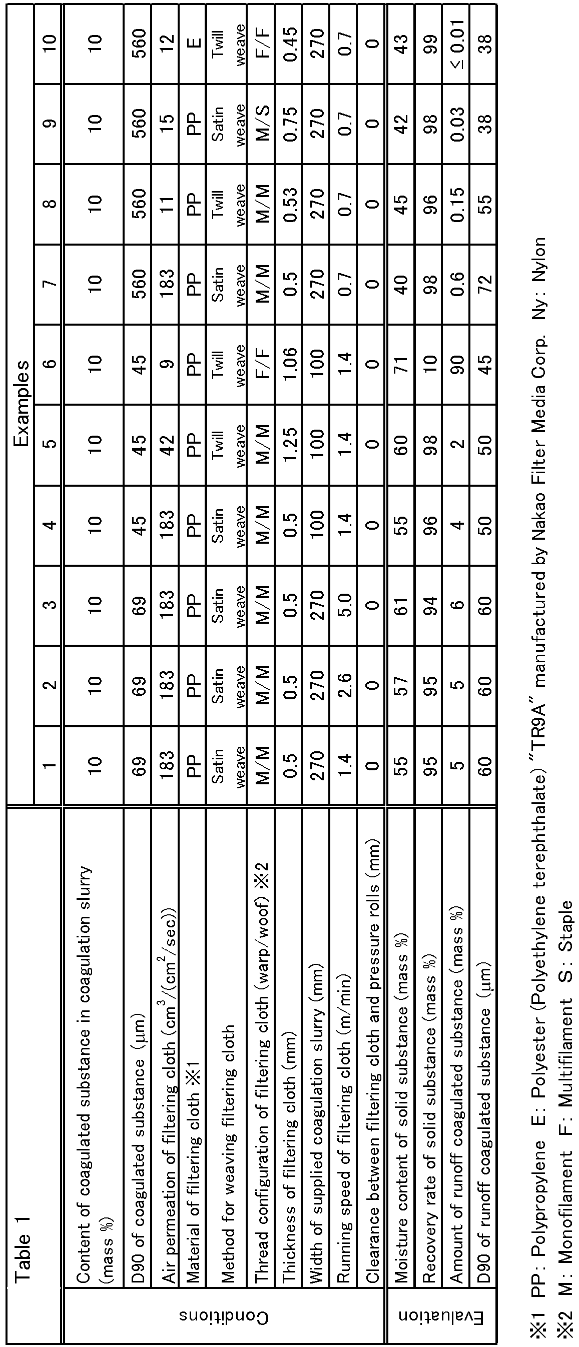

### [Solid-liquid separation and dehydration in Comparative Example 1]

The coagulation slurry was subjected to solid-liquid separation and dehydration by using a centrifugal separator ("MJC-1000" manufactured by TANAKA IRONWORKS CO., LTD.) as Comparative Example 1. However, the solid-liquid separation and dehydration of the coagulation slurry was not successful because the coagulation slurry ran off through a screen.

### [Solid-liquid separation and dehydration in Comparative Example 2]

The coagulation slurry was subjected to solid-liquid separation and dehydration by using a screw pressing machine equipped with a heating-type screw shaft ("2TR75" manufactured by MORIYAMA CO., LTD.) as Comparative Example 2. However, the solid-liquid separation and dehydration of the coagulation slurry was not successful in this case, either, because the coagulation slurry ran off through a screen.

The coagulation slurry was successfully solid-liquid separated and dehydrated and thus solid substances were successfully obtained in respective Examples, as shown in Table 1. In contrast, the coagulation slurry ran off through the screen and thus water was not successfully separated from the coagulation slurry by solid-liquid separation and dehydration in each of Comparative Example 1 using a centrifugal separator and Comparative Example 2 using a screw pressing machine.

It is understood from the results of Examples that the method for manufacturing a wet master batch and the solid-liquid separation and dehydration device for manufacturing a wet master batch of the present disclosure can successfully achieve in an efficient manner solid-liquid separation and dehydration of a coagulation slurry containing a coagulated substance having a relatively small particle size

### REFERENCE SIGNS LIST

- 1: Filtering cloth
- 2: Drive roller
- 3: Guide roller
- 4: Charge Chute
- 5: Vacuum hopper
- 6: Portion at which sucking blower is connected to gas-liquid separator
- 7: Gas-liquid separator
- 8: Drum
- 9: Pressure roll
- 9': Pressure belt
- 10: Washing device
- 11: Water-retrieval hopper

## Claims

1. A method for manufacturing a wet master batch, including preparing a carbon black slurry by dispersing carbon black in water, mixing a rubber latex and the carbon black slurry to cause a coagulation reaction to occur therein, to obtain a coagulation slurry, and subjecting the coagulation slurry to solid-liquid separation and dehydration, wherein the solid-liquid separation and dehydration comprises:
filtering the coagulation slurry through a filter by gravity and depressurizing; and
pressing the coagulation slurry thus filtered against an outer peripheral surface of a drum by a pressing portion, thereby dehydrating the coagulation slurry by pressure exerted thereon,
wherein the carbon black has an acidic functional group on a surface thereof, and
the amount of an acidic functional group of the carbon black is in the range of 0.2 µeq/m² to 3.0 µeq/m²,
wherein the amount of an acidic functional group (µeq/m²) of the carbon black is determined by neutralization titration by a base, including:
adding 2 g to 5 g of the carbon black to 50 mL of 0.976 N sodium hydrogen carbonate and agitating the mixture for 6 hours;
filtering the carbon black out from a resulting reaction solution;
adding 0.05 N an aqueous solution of hydrochloric acid to the reaction solution and then carrying out neutralization titration of the reaction solution by 0.05 N an aqueous solution of sodium hydroxide until pH of the reaction solution reaches 7.0, to determine an amount of carboxyl group;
dividing the amount of carboxyl group thus determined, by the nitrogen adsorption specific surface area (N₂SA; m²/g), to obtain an amount of carboxyl group (µeq/m²) formed per unit surface area of the carbon black; and
regarding the amount of carboxyl group (µeq/m²) formed per unit surface area as the amount of an acidic functional group (µeq/m²).

2. The method for manufacturing a wet master batch of claim 1, wherein the solid-liquid separation and dehydration is carried out on the same filter and the filter is a belt-like filtering cloth adapted to run in a circulating manner.

3. The method for manufacturing a wet master batch of claim 1 or 2, wherein a moisture content of a solid substance obtained by the solid-liquid separation and dehydration is in the range of 40 mass % to 65 mass %.

4. The method for manufacturing a wet master batch of any of claims 1 to 3, wherein a solid substance obtained by the solid-liquid separation and dehydration is a sheet or a rectangular strip having thickness of 0.5 mm to 3.0 mm.

5. The method for manufacturing a wet master batch of any of claims 1 to 4, wherein the filter has air permeability in the range of 10 cm³/(cm²·sec) to 200 cm³/(cm²·sec).

6. The method for manufacturing a wet master batch of any of claims 1 to 5, wherein a material of the filter is polypropylene or polyethylene terephthalate.

7. The method for manufacturing a wet master batch of any of claims 1 to 6, wherein the filter is a twill-woven fabric or a satin-woven fabric.

8. The method for manufacturing a wet master batch of any of claims 1 to 7, wherein threads of the filter have a monofilament configuration or a multifilament configuration.

9. The method for manufacturing a wet master batch of any of claims 1 to 8, wherein the filter has thickness in the range of 0.4 mm to 0.8 mm.

10. The method for manufacturing a wet master batch of any of claims 2 to 9, wherein the running speed of the filter is 0.5 m/minute to 3.0 m/minute.

11. The method for manufacturing a wet master batch of claim 1, further comprising using, as the carbon black having an acidic functional group on a surface thereof, carbon black having at a surface thereof an acidic functional group introduced by an oxidation treatment.

12. The method for manufacturing a wet master batch of claim 11, wherein the oxidation treatment is liquid phase oxidation or vapor phase oxidation.

## Patentansprüche

1. Verfahren zur Herstellung eines feuchten Masterbatchs, beinhaltend Vorbereiten einer Ruß-Suspension durch Dispergieren von Ruß in Wasser, Mischen eines Kautschuklatex und der Ruß-Suspension zum Veranlassen einer Koagulationsreaktion hierin, zum Erzielen einer Koagulationssuspension, und Unterwerfen der Koagulationssuspension einem Schritt der Fest-/Flüssig-Trennung und Dehydrierung, wobei die Fest-/Flüssig-Trennung und Dehydrierung folgende Schritte beinhaltet:
Filtern der Koagulationssuspension durch einen Filter durch Schwerkraft und Beaufschlagen mit Unterdruck; und
Pressen der so gefilterten Koagulationssuspension gegen eine äußere Umfangsoberfläche einer Trommel durch einen Pressabschnitt, wodurch die Koagulationssuspension durch hierauf ausgeübten Druck dehydriert wird,
wobei der Ruß eine saure Funktionsgruppe an einer Oberfläche hiervon besitzt, und
die Menge an saurer Funktionsgruppe des Rußes in dem Bereich von 0,2 µeq/m² bis 3,0 µeq/m² liegt,
wobei die Menge an saurer Funktionsgruppe (µeq/m²) des Rußes durch Neutralisierungstitrierung mit einer Base ermittelt wird, folgende Schritte beinhaltend:
Hinzufügen von 2 g bis 5 g des Rußes zu 50 mL 0,976 N Natriumhydrogencarbonat und Rühren der Mischung über einen Zeitraum von 6 Stunden;
Ausfiltern des Rußes aus einer resultierenden Reaktionslösung;
Hinzufügen von 0,05 N einer wässrigen Salzsäurelösung zur Reaktionslösung und anschließend Ausführen der Neutralisierungstitrierung der Reaktionslösung durch 0,05 N einer wässrigen Natriumhydroxidlösung, bis der pH-Wert der Reaktionslösung 7,0 erreicht, um eine Menge an Carboxylgruppe zu bestimmen;
Teilen der so bestimmten Menge an Carboxylgruppe, durch die stickstoffadsorptionsspezifische Oberfläche (N₂SA; m²/g), zum Erzielen einer Menge an Carboxylgruppe (µeq/m²), welche pro Oberflächeneinheit des Rußes gebildet wird; und
Betrachten der Menge an Carboxylgruppe (µeq/m²), welche pro Oberflächeneinheit gebildet wird, als die Menge an saurer Funktionsgruppe (µeq/m²).

2. Verfahren zur Herstellung eines feuchten Masterbatchs nach Anspruch 1, bei welchem die Fest-/Flüssig-Trennung und Dehydrierung am selben Filter ausgeführt wird, und wobei der Filter ein gürtelartiges Filtertuch ist, welches geeignet ist, in kreisförmiger Art zu laufen.

3. Verfahren zur Herstellung eines feuchten Masterbatchs nach Anspruch 1 oder 2, bei welchem ein Feuchtigkeitsgehalt eines Feststoffs, welcher durch die Fest-/Flüssig-Trennung und Dehydrierung erzielt wird, in dem Bereich von 40 Gewichtsprozent bis 65 Gewichtsprozent beträgt.

4. Verfahren zur Herstellung eines feuchten Masterbatchs nach einem der Ansprüche 1 bis 3, bei welchem ein durch die Fest-/Flüssig-Trennung und Dehydrierung erzielter Feststoff ein Blatt oder ein rechteckiger Streifen mit einer Dicke von 0,5 mm bis 3,0 mm ist.

5. Verfahren zur Herstellung eines feuchten Masterbatchs nach einem der Ansprüche 1 bis 4, bei welchem der Filter eine Luftpermeabilität in dem Bereich von 10 cm³/(cm²• Sek.) bis 200 cm³/(cm²•Sek.) besitzt.

6. Verfahren zur Herstellung eines feuchten Masterbatchs nach einem der Ansprüche 1 bis 5, bei welchem ein Material des Filters Polypropylen oder Polyethylenterephthalat ist.

7. Verfahren zur Herstellung eines feuchten Masterbatchs nach einem der Ansprüche 1 bis 6, bei welchem der Filter ein Drillich- oder ein Satingewebe ist.

8. Verfahren zur Herstellung eines feuchten Masterbatchs nach einem der Ansprüche 1 bis 7, bei welchem Fäden des Filters eine Monofilamentkonfiguration oder eine Multifilamentkonfiguration besitzen.

9. Verfahren zur Herstellung eines feuchten Masterbatchs nach einem der Ansprüche 1 bis 8, bei welchem der Filter eine Dicke in dem Bereich von 0,4 mm bis 0,8 mm besitzt.

10. Verfahren zur Herstellung eines feuchten Masterbatchs nach einem der Ansprüche 2 bis 9, bei welchem die Laufgeschwindigkeit des Filters 0,5 m/Minute bis 3,0 m/Minute beträgt.

11. Verfahren zur Herstellung eines feuchten Masterbatchs nach Anspruch 1, zudem beinhaltend das Verwenden, da der Ruß eine saure Funktionsgruppe an einer Oberfläche hiervon besitzt, von Ruß, welcher an einer Oberfläche hiervon eine saure Funktionsgruppe besitzt, die durch eine Oxidationsbehandlung eingeführt wird.

12. Verfahren zur Herstellung eines feuchten Masterbatchs nach Anspruch 11, bei welchem die Oxidationsbehandlung eine Flüssigphasenoxidation oder eine Dampfphasenoxidation ist.

## Revendications

1. Procédé de fabrication d'un mélange mère humide, comprenant les étapes consistant à préparer une pâte de noir de carbone par dispersion de noir de carbone dans de l'eau, mélanger un latex de caoutchouc et la pâte de noir de carbone afin de provoquer une réaction de coagulation en son sein, afin d'obtenir une pâte de coagulation, et soumettre la pâte de coagulation à une séparation solide-liquide et à une déshydratation, dans lequel la séparation solide-liquide et déshydratation comprennent les étapes consistant à :
filtrer la pâte de coagulation à travers un filtre par gravité et dépressurisation ; et
presser la pâte de coagulation ainsi filtrée contre une surface périphérique extérieure d'un tambour grâce à une partie pression, ce qui déshydrate la pâte de coagulation grâce à la pression exercée sur celle-ci,
dans lequel le noir de carbone présente un groupe fonctionnel acide à sa surface, et
la quantité d'un groupe fonctionnel acide du noir de carbone se situe dans la plage comprise entre 0,2 µeq/m² et 3,0 µeq/m²,
dans lequel la quantité d'un groupe fonctionnel acide (en µeq/m²) du noir de carbone est déterminée par titrage par neutralisation avec une base, ce qui comprend les étapes consistant à :
ajouter 2 g à 5 g du noir de carbone à 50 mL d'hydrogénocarbonate de sodium 0,976 N et agiter le mélange pendant 6 heures ;
filtrer le noir de carbone à partir de la solution réactionnelle résultante ;
ajouter 0,05 N d'une solution aqueuse d'acide chlorhydrique à la solution réactionnelle et effectuer ensuite un titrage par neutralisation de la solution réactionnelle avec 0,05 N d'une solution aqueuse d'hydroxyde de sodium jusqu'à ce que le pH de la solution réactionnelle atteigne 7,0, afin de déterminer une quantité de groupe carboxyle ;
diviser la quantité de groupe carboxyle ainsi déterminée par la surface spécifique d'absorption de l'azote (N₂SA ; m²/g), afin d'obtenir une quantité de groupe carboxyle (µeq/m²) formée par unité de surface du noir de carbone ; et
considérer la quantité de groupe carboxyle (µeq/m²) formée par unité de surface comme étant la quantité d'un groupe fonctionnel acide (µeq/m²).

2. Procédé de fabrication d'un mélange mère humide selon la revendication 1, dans lequel la séparation solide-liquide et la déshydratation sont mises en oeuvre sur le même filtre et le filtre est un feutre de filtration de type courroie conçu pour fonctionner de manière circulante.

3. Procédé de fabrication d'un mélange mère humide selon la revendication 1 ou 2, dans lequel une teneur en humidité d'une substance solide obtenue grâce à la séparation solide-liquide et à la déshydratation se situe dans la plage comprise entre 40 % en masse et 65 % en masse.

4. Procédé de fabrication d'un mélange mère humide selon l'une quelconque des revendications 1 à 3, dans lequel une substance solide obtenue par la séparation solide-liquide et la déshydratation est une feuille ou une bande rectangulaire présentant une épaisseur comprise entre 0,5 mm et 3,0 mm.

5. Procédé de fabrication d'un mélange mère humide selon l'une quelconque des revendications 1 à 4, dans lequel le filtre présente une perméabilité à l'air se situant dans la plage comprise entre 10 cm³/(cm²·sec) et 200 cm³/(cm²·sec).

6. Procédé de fabrication d'un mélange mère humide selon l'une quelconque des revendications 1 à 5, dans lequel un matériau du filtre est du polypropylène ou du téréphtalate de polyéthylène.

7. Procédé de fabrication d'un mélange mère humide selon l'une quelconque des revendications 1 à 6, dans lequel le filtre est un tissu à armure croisée ou un tissu à armure satin.

8. Procédé de fabrication d'un mélange mère humide selon l'une quelconque des revendications 1 à 7, dans lequel des fils du filtre présentent une configuration monofilament ou une configuration multi-filament.

9. Procédé de fabrication d'un mélange mère humide selon l'une quelconque des revendications 1 à 8, dans lequel le filtre présente une épaisseur se situant dans la plage comprise entre 0,4 mm et 0,8 mm.

10. Procédé de fabrication d'un mélange mère humide selon l'une quelconque des revendications 2 à 9, dans lequel la vitesse de déplacement du filtre est comprise entre 0,5 m/minute et 3,0 m/minute.

11. Procédé de fabrication d'un mélange mère humide selon la revendication 1, comprenant en outre une étape consistant à utiliser, en tant que noir de carbone présentant un groupe fonctionnel acide à sa surface, du noir de carbone présentant à sa surface un groupe fonctionnel acide introduit grâce à un traitement par oxydation.

12. Procédé de fabrication d'un mélange mère humide selon la revendication 11, dans lequel le traitement par oxydation est une oxydation en phase liquide ou une oxydation en phase vapeur.
